# EUROPEAN PATENT SPECIFICATION

(11) **EP 0 958 186 B1**
(45) Date of publication and mention of the grant of the patent: **12.03.2003**
(21) Application number: 96935694.8
(22) Date of filing: 11.10.1996
(51) Int. Cl.: B65D 45/22, B65D 55/04

(54) **A DEVICE FOR INTERLOCKING TWO PARTS**
VORRICHTUNG ZUR VERRIEGELUNG VON ZWEI TEILEN
DISPOSITIF DE SOLIDARISATION DE DEUX PIECES

(30) Priority: 17.10.1995 SE 9503628
(43) Date of publication of application: 24.11.1999
(73) Proprietor: NEFAB AB, 822 92 Alfta (SE)
(72) Inventor: WAHLEN, Kent, S-828 30 Edsbyn (SE)
(74) Representative: Olsson, Jan
(86) International application number: SE9601293
(87) International publication number: WO97014626

(56) References cited:
- US-A- 4 371 092
- US-A- 5 102 001
- US-A- 5 373 959

## Description

### FIELD OF THE INVENTION AND PRIOR ART

This invention is related to a device for interlocking two parts according to the precharacterizing part of enclosed claim 1. It is preferred that said parts are constituted by parts of a packing, for example a case, a container, a loading pallet like device etc.

A device of the type defined in the introduction is known through US 5 102 001 and this device may be brought into a locking state and released therefrom with a comparatively small amount of effort. However, it should be possible to improve the construction of a device of this type further and make it still easier to operate.

### SUMMARY OF THE INVENTION

The object of the present invention is to provide a device of the type defined in the introduction, which may be operated very easily and reliably and manufactured to a low cost.

This object is according to the invention achieved by providing a device having the features of appended claim 1.

By the fact that the actuatable locking member is designed as a resilient tongue comprising the hook and a portion for manual actuation and the resilient tongue is stamped out of the locking element, a rapid and safe locking of the two parts relative to each other is possible. The device, and particularly the actuatable locking member, may through this construction be manufactured to a low cost.

Further advantages and preferred features of the device according to the invention appear from the dependent claims.

### SHORT DESCRIPTION OF THE DRAWINGS

With reference to the enclosed drawings, a more specific description of an embodiment of the invention cited as an example will follow hereinafter.

In the drawings:
Fig 1 is a perspective view of a part of a case provided with the device according to the invention;
Fig 2 is an exploded view partly in section illustrating the locking device of the case according to Fig 1 but in a side view;
Fig 3 is a view with the same components as in Fig 2 but illustrating the locking device in a locked state;
Figs 4 and 5 are perspective views from opposite directions of the locking device viewed on its own in a state where the locking element and the holding element are locked to each other;
Figs 6 and 7 are perspective views similar to Figs 4 and 5 but of the holding element on its own; and
Figs 8 and 9 are perspective views similar to Figs 4 and 5 but illustrating the locking element on its own.

### DETAILED DESCRIPTION OF A PREFERRED EMBODIMENT

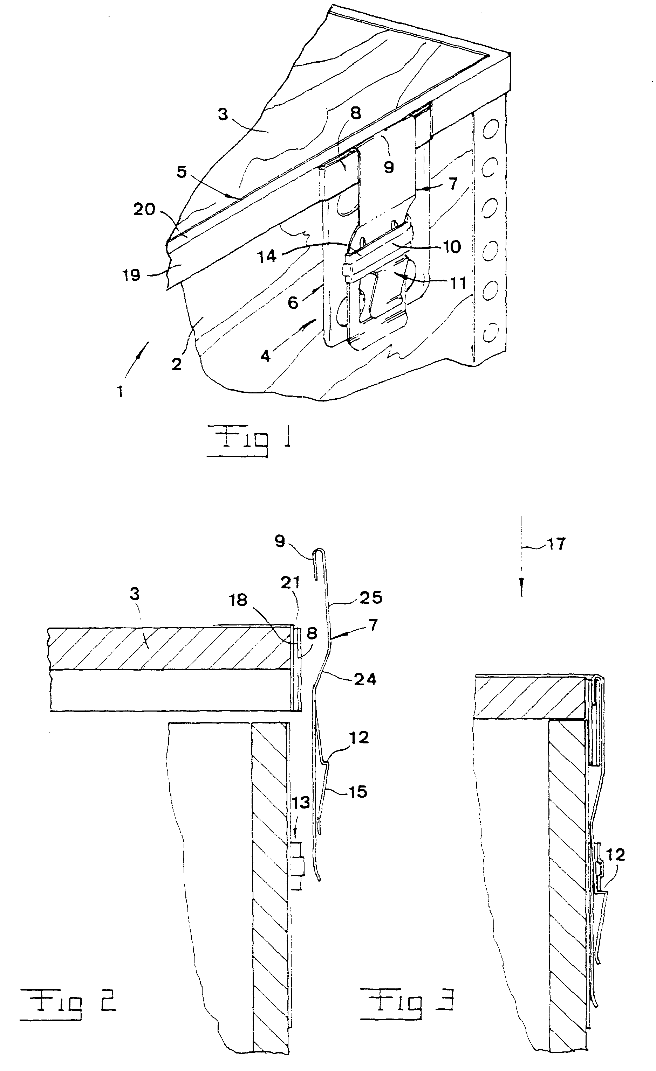

A case generally denoted 1 is illustrated in Figs 1-3. This case comprises two parts 2 and 3 respectively. One 2 of the parts is indicated to be formed by a wall whereas the other part 3 is formed by a lid. However, this is not critical to the concept of the invention; the two parts could instead be formed by wall/bottom, wall/wall or any other arbitrary combination of two parts.

The device comprises first locking means 4 arranged on the wall 2 and second locking means 5 arranged on the lid 3. In the example, the wall 2 and lid 3 extend at an angle, more specifically a substantially right angle, to each other but this is not a requirement; the parts could also be orientated in substantially parallel planes.

The locking means 4 and 5 are engagable with each other so as to lock the parts 2 and 3 to each other. The first locking means 4 comprises a holding element 6 attachable to the part 2 and a locking element 7.

A first set of co-operating locking members 8, 9 is arranged on the second locking means 5 and the locking element 7 to interlock the same.

A second set of co-operating locking members 10, 11 is arranged on the holding element and the locking element to interlock the same. This second set of locking members comprises at least one locking member 11, which is arranged to be actuated for releasing the interlocking of the locking element 7 and the holding element 7.

The actuatable locking member 11 is resiliently compliant in order to release the locking of the locking element and the holding element. It is preferred that the actuatable locking member 11 comprises a hook 12 arranged to engage with the second locking member 10 in the second set of locking members 10, 11.

It is preferred that the actuatable locking member 11 is provided on the locking element 7. In this embodiment it is, accordingly, the locking element 7 which comprises the hook 12.

The holding element 6 comprises a female receiver 13, in which the locking element 7 is introduceable.

It is suitable that the locking member 10, which is contained in the second set, of the holding element 6 is constituted by a portion which at least partly forms the female receiver 13. The receiver 13 is formed by means of a loop provided on the holding element 6. This loop 14 is suitably stamped out of the holding element 6 so that the loop together with the rest of the holding element will define an opening forming the receiver 13.

The actuatable locking member 11 is designed as a resilient tongue comprising the hook 12 and a portion 15 for manual actuation. More specifically, the operator is intended to apply a compression force by the hand or suitable auxiliary means on the portion 15 so as to resiliently move the tongue 11 aside so that the locking element 7 is released for withdrawal out of the receiver 13.

The tongue 11 is suitably stamped out of the locking element 7. It is preferred that an opening 16 arises as a consequence of said stamping, said opening being surrounded on all sides and in one plane by portions of the locking element 7. The tongue 11 is intended to be resiliently movable substantially perpendicularly to the plane of the opening 16.

It is preferred that the locking element 7 in its entirety is produced by a material suitable for achieving resilient properties, for instance steel, although other materials are possible as long as the resiliency aimed at is at hand.

The locking member 9, which is included in the first set, of the locking element 7 is arranged to enter into a locking engagement with the second locking means 5 when the locking element 7 is displaced in a direction indicated with the arrow 17, said displacement involving establishment of interlocking of the locking members 10, 11 contained in the second set, that is interlocking of the holding element 6 and the locking element 7.

The locking member 9 of the locking element 7 is in the example constituted by a hook member arranged to hook on to the second locking means 5. In the example, the second locking means 5 is designed as a band like fitting on the part 3. This band like fitting comprises the previously mentioned locking member 8, about which the hook member 9 of the locking element 7 is arranged to engage. In the example the locking member 8 is formed by a sheet like portion of the band fitting 5. This sheet portion 8 has, behind itself, a space 18 capable of receiving the tip portion of the hook member 9. In the example the sheet portion 8 is present at an edge of the part 3. In order to provide the space 18 previously mentioned for the tip portion of the hook member 9, the sheet portion 8 is spaced from the adjacent edge surface of the part 3 with at least the thickness of the tip portion of the hook member 9.

The band like fitting 5 has, in the example, a cross sectionally angular design with a first shank 19 located externally of the outer edge of the part 3 and a second shank 20 located on top of the part 3. The shanks 19, 20 form a substantially right angle between themselves. In order to provide the space 18, the shank 19, which comprises the sheet portion 8, is in its entirety or possibly only as far as the sheet portion 8 is concerned, located at a distance from the peripherical edge surface of the part 3. In the example it is indicated that only the sheet portion 8 has said distance to the peripherical edge surface of the part 3, which has been achieved by the sheet portion 8 being bent outwardly relative to the shank 19 for the rest. In the area of the connection of the two shanks 19, 20, the band fitting 5 comprises, in addition, a slot 21 forming an introduction opening for the tip portion of the hook member 9 so that the hooking engagement according to Fig 3 can be obtained.

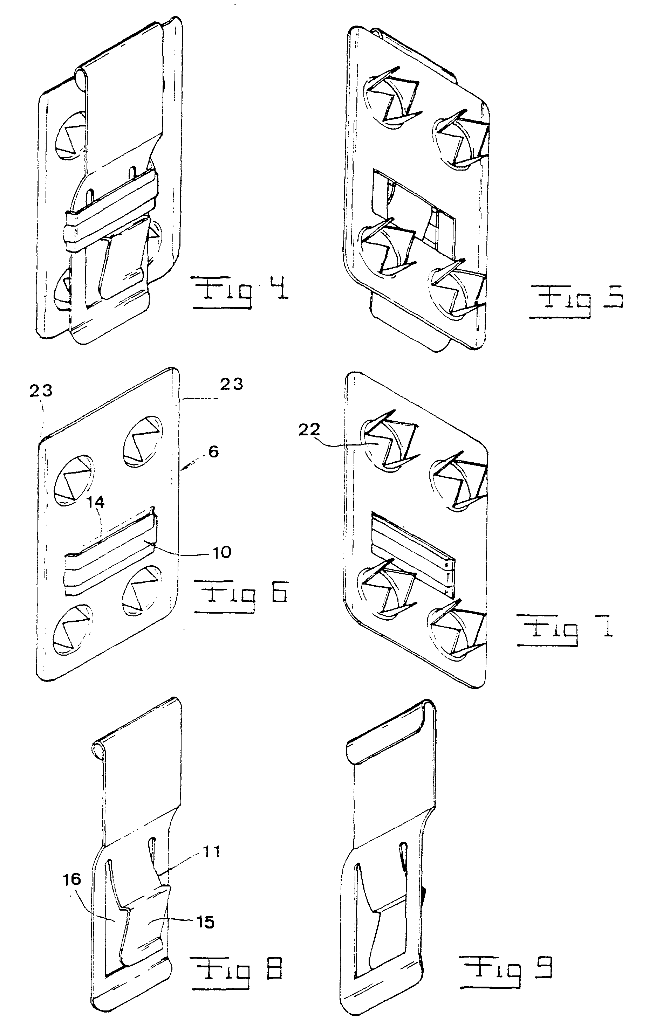

The holding element 6 comprises means 22 for securing the holding element in the part 2. In the example these means 22 are formed by securing tabs stamped out of the material of the holding element 6. For example, such securing tabs 22 may be provided in connection with four holes stamped out of the holding element 6 as is particularly clearly apparent from Figs 6 and 7. As has been described before, also the loop 14 is stamped out of the material of the holding element. The starting material for the holding element 6 is a band piece of metal, suitably steel, which is subjected to said stamping operations and also to the bending operations required to bend the tabs 22 and provide the loop 14. In addition, it is preferred that the edge portions of the holding element 6 are deflected as indicated at 23 so that when the holding element is hammered onto the part 2, these edges 23 will tend to intimately abut against the part 2 while avoiding outwardly protruding components.

The locking element 7 comprises a portion 24 bent outwardly from the part 2, the purpose of said bent portion 24 being to locate a portion 25 of the locking element situated between the locking member 11 and the locking member 9 so that said portion 25 may extend externally of the locking member/sheet portion 8 of the locking means 5.

The portion 15 previously mentioned and adapted for manual actuation, forms, in the example, a sloping ramp arranged to resiliently deform the locking element 11 on introduction of the locking element 7 in the receiver 13 so that the hook 12 of the locking element 11 may pass through the receiver 13 and then snap out to hookingly engage with the locking member 10 of the holding element 6 as is indicated in Figs 3, 4 and 5.

The locking device according to the invention is used in the following manner:

When the two parts 2 and 3 are to be locked to each other, a locking element 7 is provided. This locking element 7 is introduced into the receiver 13. During introduction into the receiver, the hook member 9 will hookingly engage with the locking member/sheet portion 8. At the end of this movement of introduction, the hook 12 establishes a hooking engagement with the loop 14 so that the locking element 7 efficiently will be locked into position relative to the holding element 6 and, simultaneously, lock the part 3 relative to the part 2 by means of the hook member 9. When the locking is to be released, a compression force is exerted on the portion 15, which means that the hook 12 is brought out of engagement with the locking member 10, whereupon the locking member 7 may be withdrawn out of the receiver 13 in a direction opposite to the arrow 17. During this withdrawal, the engagement between the hook member 9 and locking member 8 is released so that the part 3 becomes free to move relative to the part 2.

The solution described involves a rapid and safe locking of the parts 2 and 3 relative to each other at the same time as the locking member 7 easily may be exchanged for a new locking element in case it would have been damaged during use. It is, accordingly, an important feature of the concept of the invention that the locking element 7 is entirely separable from the holding element 6.

## Claims

1. A device for interlocking two parts (2, 3), comprising first locking means (4) on a first (2) of the parts and second locking means (5) on a second (3) of the parts, said locking means being engageable with each other, said first locking means (4) comprising a holding element (6) attachable to the first part and a locking element (7), a first set of co-operating locking members (8, 9) being arranged on the locking element (7) and said second locking means (5) to interlock the same, whereas a second set of co-operating locking members (10, 11) is arranged on the locking element and the holding element to interlock the same, the second set of locking members (10, 11) comprising at least one locking member (11), which is arranged to be actuated for releasing said interlocking of the locking element and the holding element, the actuatable locking member (11) comprising a hook (12) arranged to engage with the second locking member (10) in the second set of locking members, **characterized in that** the actuatable locking member (11) is designed as a resilient tongue comprising the hook (12) and a portion (15) for manual actuation, said resilient tongue stamped out of the locking element (7).

2. A device according to claim 1, **characterized in that** the holding element (6) comprises a female receiver (13), in which the locking element (7) is introduceable and which is formed by means of a loop (14) provided on the holding element, the loop being stamped out of the holding element (6).

3. A device according to claim 2, **characterized in that** the locking member (10), which is included in the second set, of the holding element (6) is constituted by a portion forming the female receiver (13).

4. A device according to claims 2 or 3, **characterized in that** the hook (12) is arranged to engage with the locking member (10) of the holding element (6) on introduction of the locking element (7) into the receiver (13).

5. A device according to any preceding claim, **characterized in that** the locking member (9), which is included in the first set, of the locking element (7) is arranged to enter into a locking engagement with said second locking means (5) when the locking element (7) is displaced in a direction involving establishment of interlocking of the locking members (10, 11) included in the second set.

## Patentansprüche

1. Vorrichtung zur Verriegelung von zwei Teilen (2, 3), mit einer ersten Verriegelungseinrichtung (4) auf einem ersten (2) der Teile und einer zweiten Verriegelungseinrichtung (5) auf einem zweiten (3) der Teile, wobei die Verriegelungseinrichtungen ineinander greifen können, wobei die erste Verriegelungseinrichtung (4) ein Halteelement (6), das mit dem ersten Teil befestigbar ist, und ein Riegelelement (7) aufweist, wobei ein erster Satz von miteinander zusammen arbeitenden Riegelgliedern (8, 9) auf dem Riegelelement (7) und der zweiten Verriegelungseinrichtung (5) angeordnet ist, um diese zu verriegeln, wobei ein zweiter Satz von miteinander zusammenarbeitenden Riegelgliedern (10, 11) auf dem Riegelelement und dem Halteelement angeordnet ist, um diese zu verriegeln, wobei der zweite Satz von Riegelgliedern (10, 11) zumindest ein Riegelglied (11) aufweist, welches ausgebildet ist, um die Verriegelung des Riegelelementes und des Halteelementes freizugeben, wobei das betätigbare Riegelelement (11) einen Haken (12) aufweist, der in das zweite Riegelelement (10) in dem zweiten Satz von Riegelgliedern eingreifen kann, **dadurch gekennzeichnet, dass** das betätigbare Riegelelement (11) als eine elastische Zunge ausgebildet ist, die den Haken (12) und einen Bereich (15) zur manuellen Betätigung aufweist, wobei die elastische Zunge aus dem Riegelelement (7) ausgestanzt ist.

2. Vorrichtung nach Anspruch 1, **dadurch gekennzeichnet, dass** das Halteelement (6) einen weiblichen Aufnehmer (13) aufweist, in den das Riegelelement (7) einführbar ist und der durch eine Schlaufe (14) auf dem Halteelement ausgebildet ist, wobei die Schlaufe aus dem Halteelement (6) ausgestanzt ist.

3. Vorrichtung nach Anspruch 2, **dadurch gekennzeichnet, dass** das in dem zweiten Satz enthaltene Riegelelement (10) des Halteelementes (6) durch einen Bereich ausgebildet ist, der den weiblichen Aufnehmer (13) formt.

4. Vorrichtung nach Anspruch 2 oder 3, **dadurch gekennzeichnet, dass** der Haken (12) ausgebildet ist, um in das Riegelglied (10) des Halteelementes (6) bei der Einführung des Riegelelementes (7) in den Aufnehmer (13) einzugreifen.

5. Vorrichtung nach einem der vorhergehenden Ansprüche, **dadurch gekennzeichnet, dass** das in dem ersten Satz enthaltene Riegelglied (9) des Riegelelementes (7) ausgebildet ist, um in einen verriegelnden Eingriff mit der zweiten Verriegelungseinrichtung (5) einzutreten, wenn das Riegelelement (7) in eine Richtung verstellt wird, bei der eine Verriegelung der im zweiten Satz enthaltenen Riegelglieder (10, 11) stattfindet.

## Revendications

1. Dispositif pour accoupler deux parties (2, 3) comprenant des premiers moyens de verrouillage (4) sur une première partie (2) et des seconds moyens de verrouillage (5) sur une seconde partie (3), lesdits moyens de verrouillage pouvant s'engager l'un avec l'autre, lesdits premiers moyens de verrouillage (4) comprenant un élément de support (6) destiné à être fixé à la première partie et un élément de verrouillage (7), un premier ensemble de membres de verrouillage coopérants (8, 9) étant disposé sur l'élément de verrouillage (7) et lesdits seconds moyens de verrouillage (5) pour les accoupler, alors qu'un second ensemble de membres de verrouillage coopérants (10, 11) est disposé sur l'élément de verrouillage (7) et l'élément de support pour les accoupler, le second ensemble de membres de verrouillage (10, 11) comprenant au moins un membre de verrouillage (11) qui est disposé pour être activé de façon à libérer ledit accouplement de l'élément de verrouillage et de l'élément de support, le membre de verrouillage activable (11) comprenant un hameçon (12) disposé pour s'engager avec le second membre de verrouillage (10) dans le second ensemble de membres de verrouillage, **caractérisé en ce que** le membre de verrouillage activable (11) est conçu comme langue élastique comprenant l'hameçon (12) et une portion (15) pour activation manuelle, ladite langue élastique étant ajoutée à l'élément de verrouillage.

2. Dispositif selon la revendication 1, **caractérisé en ce que** l'élément de support (6) comprend un receveur femelle (13) dans lequel l'élément de verrouillage (7) peut être introduit et qui est formé par une boucle (14) disposée sur l'élément de support, la boucle étant ajoutée à l'élément de support (6).

3. Dispositif selon la revendication 2, **caractérisé en ce que** le membre de verrouillage (10), qui est inclus dans le second ensemble, de l'élément de support (6) est constitué par une portion formant le receveur femelle (13).

4. Dispositif selon la revendication 2 ou 3, **caractérisé en ce que** l'hameçon (12) est adapté pour s'engager avec le membre de verrouillage (10) de l'élément de support (6) à l'introduction de l'élément de verrouillage (7) dans le receveur (13).

5. Dispositif selon l'une des revendications précédentes, **caractérisé en ce que** le membre de verrouillage (9), qui est inclus dans le premier ensemble, de l'élément de verrouillage (7) est adapté pour prendre une position de verrouillage avec lesdits moyens de verrouillage (5) lorsque l'élément de verrouillage (7) est déplacé dans une direction entraînant l'accouplement des membres de verrouillage (10, 11) inclus dans le second ensemble.
